# EUROPEAN PATENT SPECIFICATION

(11) **EP 3 776 034 B1**
(45) Date of publication and mention of the grant of the patent: **02.12.2026**
(21) Application number: 19785484.7
(22) Date of filing: 11.04.2019
(51) Int. Cl.: G02B 6/36, G02B 6/26, G02B 6/38, G02B 6/42

(54) **ALIGNMENT STRUCTURE FOR A FIBER OPTIC FERRULE AND MECHANICAL-OPTICAL INTERFACE**
AUSRICHTUNGSSTRUKTUR FÜR EINE GLASFASERHÜLSE UND MECHANISCHE-OPTISCHE SCHNITTSTELLE
STRUCTURE D'ALIGNEMENT POUR UNE FERRULE DE FIBRE OPTIQUE ET INTERFACE MÉCANIQUE-OPTIQUE

(30) Priority: 12.04.2018 US 201862656894 P
(43) Date of publication of application: 17.02.2021
(73) Proprietor: US Conec, Ltd, Hickory, NC 28603-2306 (US)
(72) Inventor: KURTZ, Daniel, Huntersville, North Carolina 28708 (US); CHILDERS, Darrell, Hickory, North Carolina 28601 (US); HENLEY, Brent, Newton, North Carolina 28658 (US)
(74) Representative: Stoffregen, Hans-Herbert
(86) International application number: PCT/US2019/026938
(87) International publication number: WO 2019/200066

(56) References cited:
- US-A- 5 241 612
- US-A1- 2007 098 328
- US-A1- 2011 103 747
- US-A1- 2015 301 285
- US-B1- 9 651 749
- US-B2- 8 985 865
- US-B2- 9 939 598

## Description

### FIELD OF THE INVENTION

The invention relates to a fiber optic ferrule comprising: a main body having a plurality of optical fiber receiving members therein, each of the plurality of optical fiber receiving members configured to receive an optical fiber therein; a surface on the main body in optical alignment with the plurality of optical fiber receiving members; and an alignment structure extending from the surface outward away from or inward into the main body, the alignment structure is adapted to align the fiber optic ferrule with a receptacle.

Photonic-enabled transceiver devices typically are optically coupled to optical fibers by a fiber optic ferrule in which the optical fibers are secured. The fiber optic ferrule may have internal optical structures (e.g., lenses) that may be used to shape and/or direct the light beams between the transceiver and the optical fibers. The fiber optic ferrule maybe coupled to a mechanical-optical interface (MOI) or other receptacle that may also have internal optical structures. In some instances, the other receptacle might be an adapter that is used to optically couple to fiber optic ferrules.

The transceiver devices and the fiber optic ferrules are typically aligned with one another to ensure proper transmission of the light between the components. In single-mode transceivers, because the alignment tolerances are so stringent, the receptacle and the transceiver devices are usually aligned by active alignment. Once the receptacle and the transceiver device are aligned, then the fiber optic ferrule can be aligned with the receptacle and/or transceiver device. However, the devices are typically made from different materials, which have different coefficients of thermal expansion (CTE), and the different CTEs may affect the alignment of the various components. In general, a change in ambient temperature (ΔT) causes a change in a dimension (ΔD) of the material of the optical ferrule and/or lenses (expansion or contraction). These variables are related as: ΔD = D x (ΔT) x CTE, where D is a distance between critical features (e.g., lenses etched in Si and the alignment features made of ferrule plastic material). In the prior ferrules, this distance would correspond to the distance between guide pins used to align the fiber optic ferrules and the location of the light exiting/ entering the fiber optic ferrule. In order to reduce the change in the dimensions (and thus the alignment), it would be better to have the alignment feature closer to the location of where the light exits/enters the fiber optic ferrule.
US 9,651,749 B1 relates to an interposer comprising a substrate having at least a top surface and a bottom surface, said top and bottom surfaces being substantially parallel; at least one series of bottom cavities on said bottom surface; at least one expansion cavity contiguous with said at least one series of bottom cavities, said at least one expansion cavity being larger than each of said bottom cavities.
Subject matter of US 2007/0098328 A1 is a ferrule comprising a molded ferrule body defining fiber bores, an end face of a connective end of the ferrule positioned about the fiber bores, and an integral reference surface for determining the angularity of the end face.
US 2011/0103747 A1 relates to an optical fiber connector including a lens member integrally forming pairs of lens at a front face thereof, a seat member assembly retained on a rear face of the lens member and fiber cables.
US 5,241,612 A relates to a multicore optical connector
According to US 9,939,598 B2 an fiber-optic connector assembly includes a fiber optic ferrule and a connector, which engage an optical transceiver component. The fiber optic ferrule engages a mating plane of a lens array in the optical transceiver component and floats within the connector.
US 8,985,865 B2 relates to a unitary fiber optic ferrule , which reflects light off an interior lens and through the fiber optic ferrule.

### SUMMARY OF THE INVENTION

An object of the invention is to reduce the distance between the alignment features and the exit/entry location of the light. A stable and secure alignment should be made possible.

To solve the object, the invention provides a fiber optic ferrule with the alignment structure having a shape of a dog bone as defined by appended claim 1.

In some embodiments, the fiber optic ferrule comprises a plurality of lenses, each of the plurality of lenses being in optical alignment with one of the plurality of optical fiber
receiving members, wherein preferably each of the plurality of lenses is disposed in the alignment structure.

In some embodiments, the surface lies in a plane that is generally parallel to a longitudinal axis through the plurality of optical fiber receiving members.

In some embodiments, the surface lies in a plane that is generally perpendicular to a longitudinal axis through the plurality of optical fiber receiving members.

In another aspect, the invention is directed to a combination of a fiber optic ferrule and an optical component, wherein the optical component having an engagement surface to engage a portion of the surface of the main body of the fiber optic ferrule and a second alignment structure having a center portion extending between two outside portions, the outside portions being on opposite sides of the center portion, wherein one of the first and second alignment structures extend outward and the other of the first and second alignment structures extend inwardly.

Additional features and advantages of the invention will be set forth in the appended claims, in the detailed description which follows, and in part will be readily apparent to those skilled in the art from
that description or recognized by practicing the invention as described herein, including the detailed description which follows, the claims, as well as the appended drawings.

It is to be understood that both the foregoing general description and the following detailed description of the present embodiments of the invention, and are intended to provide an overview or framework for understanding the nature and character of the invention as it is claimed. The accompanying drawings are included to provide a further understanding of the invention, and are incorporated into and constitute a part of this specification. The drawings illustrate various embodiments of the invention, and together with the description serve to explain the principles and operations of the invention.

### BRIEF DESCRIPTION OF THE DRAWINGS

FIG. 1 is a perspective view of one embodiment of a fiber optic ferrule from the bottom according to the present invention;
FIG. 2 is a perspective view from the top of the fiber optic ferrule in FIG. 1;
FIG. 2A is side elevational view of the fiber optic ferrule in FIG. 2;
FIG. 3 is a perspective view of the fiber optic ferrule in FIG. 1 from the bottom and in alignment with a receptacle;
FIG. 4 is a perspective view of the fiber optic ferrule in FIG. 1 from the bottom and in alignment with a receptacle having lenses therein;
FIG. 5 is a perspective view of the receptacle in FIG. 4;
FIG. 6 is a plane view of a portion of the fiber optic ferrule and the receptacle in FIG. 3 showing the fit;
FIG. 7 is a perspective view of a second embodiment of a fiber optic ferrule from the front according to the present invention;
FIG. 8 is a side elevational view of the fiber optic ferrule in FIG. 7;
FIG. 9 is a front elevational view of the fiber optic ferrule in FIG. 7;
FIG. 10 is a perspective view of one embodiment of a receptacle to be used with the fiber optic ferrule in FIG. 9;
FIG. 11 is a perspective view of the fiber optic ferrule in FIG. 7, the receptacle in FIG. 10, a mechanical-optical interface, and circuit board;
FIG. 12 is a perspective view of two fiber optic ferrules of FIG. 7 and an adapter to align the two fiber optic ferrules; and
FIG. 13 is a perspective view of an embodiement of a fiber optic ferrule not according to the present invention.

### DETAILED DESCRIPTION OF THE PREFERRED EMBODIMENTS

Reference will now be made in detail to the present preferred embodiment(s) of the invention, examples of which are illustrated in the accompanying drawings. Whenever possible, the same reference numerals will be used throughout the drawings to refer to the same or like parts.

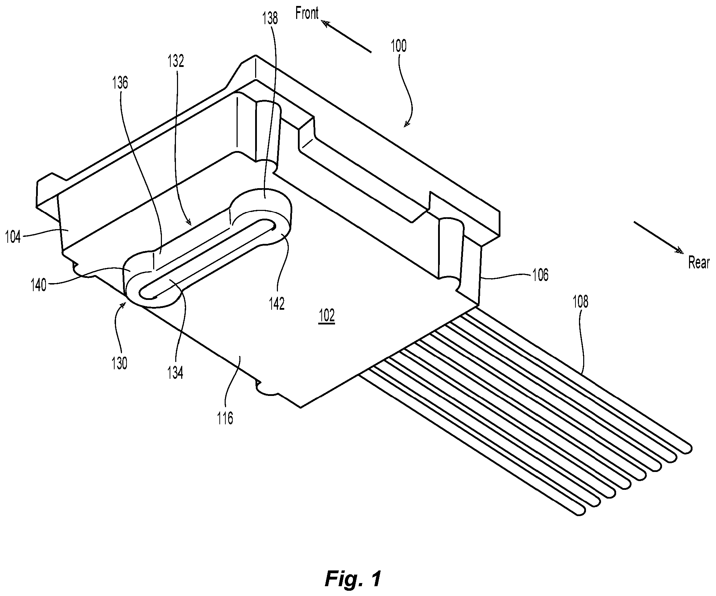

One embodiment of a fiber optic ferrule **100** according to the present invention is illustrated in FIGS. 1-4. The fiber optic ferrule **100** has a main body **102** that extends between a front end **104** and a rear end **106.** A plurality of optical fibers **108** can be secured within the fiber optic ferrule **100.** The optical fibers **108** are inserted into the fiber optic ferrule **100** through a rear opening **110** through the rear end **106.** Each of the plurality of optical fibers **108** is inserted into one of a plurality of optical fiber receiving members (e.g., openings or v-grooves) **112** in a center portion of the main body **102.** The fiber optic ferrule **100** is a total internal reflection fiber optic ferrule meaning that the light to and from the optical fibers **108** encounters lenses **114** towards the front end **104** and passes through ferrule **100** through a bottom surface **116.** It will be understood by one of ordinary skill in the art in view of this patent application that instead of a single row of optical fibers **108,** two or more rows of optical fibers, or other arrangement of optical fibers **108** (instead of a row), may be used without departing from the scope of the present patent application.

With regard to the embodiment in FIGS. 1-4, Applicant notes that the term "front" or "forward" means that direction where the optical fibers are terminated, while the term "rear" or "rearward" is used to mean the direction from which the optical fibers enter into the fiber-optic ferrule or fiber optic connector. Thus, "front" is that part of the fiber optic ferrule **100** on the left side of FIG. 1 (see arrow) and "forward" is out and to the left. "Rear" is that part of the fiber optic ferrule that is on the right side of the page and "rearward" is toward the right.

The fiber optic ferrule **100** has two openings in a top surface **118** for an adhesive/ epoxy to hold the plurality of optical fibers **108** within the fiber optic ferrule **100.** The first opening **120** is between the plurality of optical fiber receiving members **112** and the rear end 106. The second opening **122** is between the plurality of optical fiber receiving members **112** and the front end **104.** The second opening **122** is usually in communication with the ends of each of the plurality of optical fibers **108,** but the plurality of optical fibers **108** may end before the second opening or even extend beyond the second opening **122.** See, e.g., U.S. Patent Nos. 8,985,865; 9,618,771; and 9,983,365, owned by the same applicant as the present invention. However, the ferrule **100** need not have either or both of the openings **120,122** and may simply have only the opening at the rear end **106.**

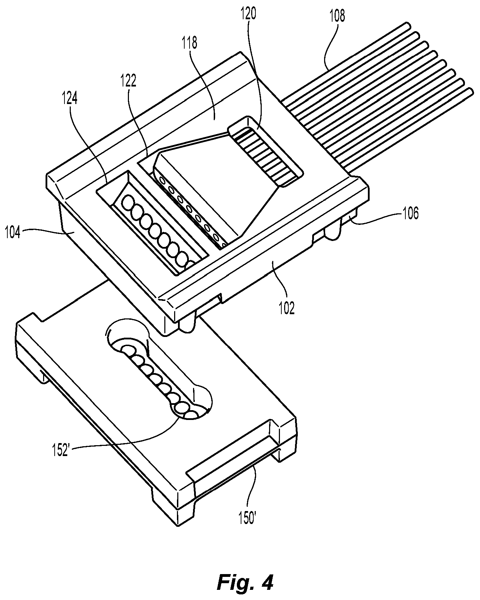

There may also be another opening or cavity in the main body **102** of the fiber optic ferrule **100** - lens opening **124.** This lens opening **124** has the plurality of lenses **114,** see FIG. 4, that may be exposed to air or covered with a reflective coating, causing them to be total internal reflective lenses. As such, the light passing through the fiber optic ferrule **100** is turned about 90 degrees within the fiber optic ferrule **100** by the plurality of lenses **114.** The plurality of lenses **114** may also condition the light in other ways, e.g., collimating the light, expanding or reducing the size of the light beam, etc.

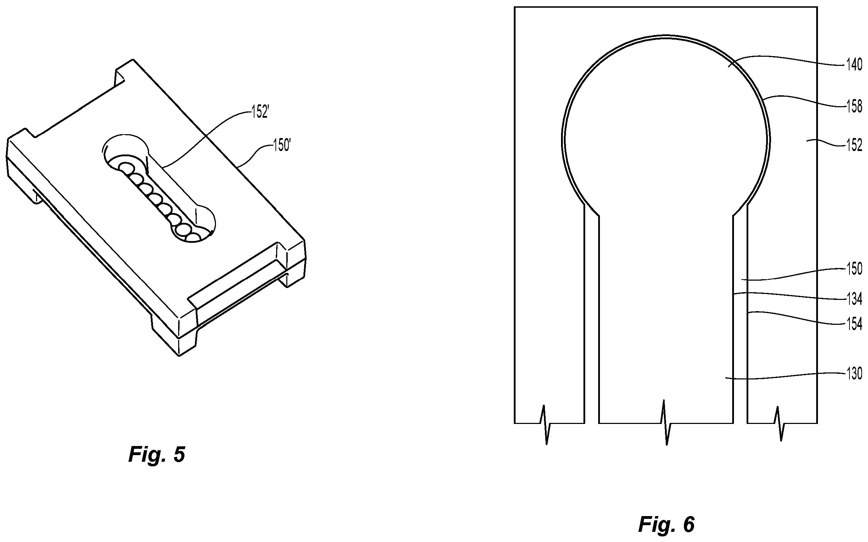

On the bottom surface **116** is an alignment structure **130.** It is noted that the bottom surface **116** is also the surface through which the light passes to and from the plurality of optical fibers **108.** The alignment structure **130** extends from the bottom surface **116** and away from the main body **102.** In the middle **132** of the alignment structure is a light transmission window **134** that is in optical alignment with the plurality of lenses **114** and the plurality of optical fibers **108.** The light could emit from a photonic integrated circuit (PIC), a VCSEL, or from another light source. Alternatively, light output from or input into the optical fibers may pass through lenses in another aperture in the MOI onto a photodetector or PIC of the transceiver below the lens array of the MOI. See FIGS. 4 and 5 and the related discussion below. It will be appreciated by one of ordinary skill in the art reading this patent application that while the term "transmission" is being used for transmission window **134,** the discussion is equally applicable to reception of optical beams passing therethough.

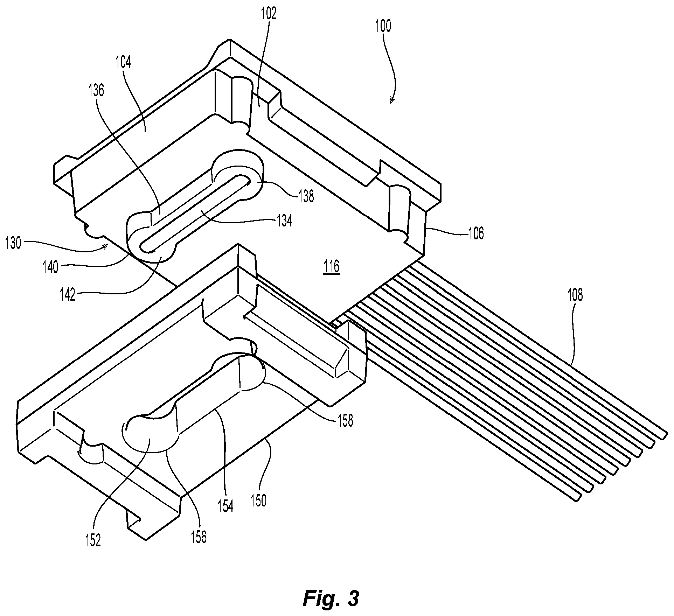

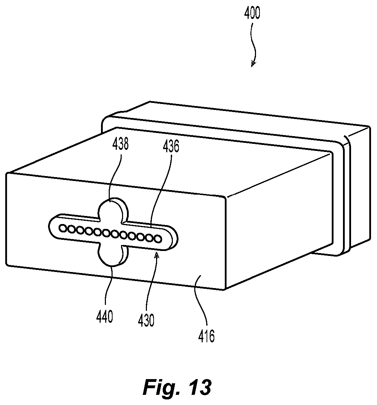

The alignment structure **130** is configured similar to the shape of a dog bone, the reasons for which will be discussed below. However, it should be noted that other non claimed configurations are possible. See, e.g., FIG. 13. The alignment structure **130** has a first portion **136** extending between two second portions **138,140** along the bottom surface **116.** As illustrated, the first portion **136** is generally rectangularly shaped, but could have other configurations as long as the functions of the alignment structure **130** as noted below are satisfied. For example, in a non claimed example the first portion **136** could have convex or concave sides rather than the straight ones. The two second portions **138,140** are illustrated as circular portions that connect with the first portion **136** at the ends thereof. The first portion **136** is preferably as long as the transmission window **134** to allow the light to pass therethrough, but it could be longer or shorter. The transmission window **134** can be longer than the first portion **136** so that the transmission window **134** extends into the second portions **138,140.** See, e.g., FIG. 3. If the transmission window **134** is shorter than the first portion **136,** then the second portions **138,140** are closer to edges of the fiber optic ferrule **100.** In a variation of the alignment structure **130,** there may be more than one of each of the second portions **138,140,** without departing from the scope of this patent application. For example, on each side of the first portion **136,** there may be two circular portions that connect with the first portion **136** at the ends thereof.

The second portions **138,140** are generally circular as illustrated in the figures. The second portions **138,140** have a diameter that is about 0.766 mm, and the first portion **136** has a width of about 0.516 mm. Thus, the diameter of the second portions **138,140** is about 50% larger than the width of the first portion **136.** It is preferred that the diameter of the second portions **138,140** is at least 30% larger than the width of the first portion **136.** It is generally more preferable that the diameter of the second portions **138,140** is at least 50% larger than the width of the first portion **136.** It should also be noted that the second portions **138,140** may also have other configurations as long as the functions of the alignment structure **130** as noted below are satisfied. For example, the second portions **138,140** could be more oval, tear-drop shaped, or two rounded portions separated by a straight portion and still fall within the scope of the present invention. The first portion **136** may also have other features including, for example, a reduced width at the junction with the second portions **138,140** so the second portions **138,140** have more of a curved outer edge.

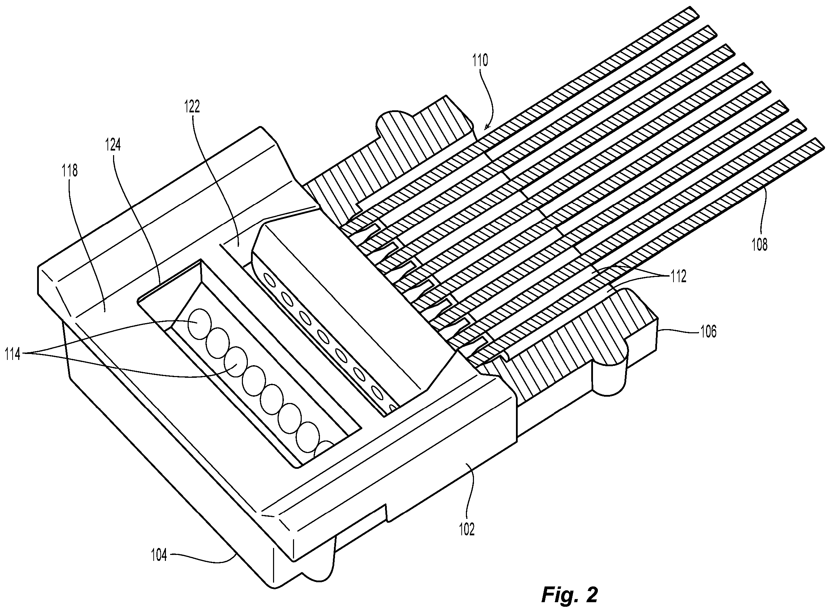

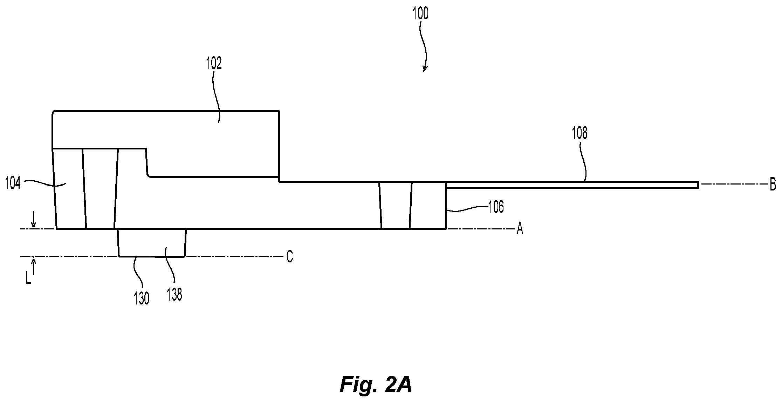

The bottom surface **116** lies in a first plane **A,** which is generally parallel to a plane **B** (and a longitudinal axis) in which the plurality of optical fibers **108** (and the plurality of optical fiber receiving members **112)** lie. However, it is possible that the planes **A** and **B** are not parallel to one another as illustrated in U.S. Patent No. 8,985,865. The alignment structure **130** has a front face **142** that lies in a plane **C** that is also preferably parallel to planes **A** and **B.** See FIG. 2A.

The alignment structure **130** extends a distance **L** of about 0.3 mm from the bottom surface **116** and away from the main body **102.** However, the distance that could be greater or less, depending on the need of the user and the structure that the fiber optic ferrule engages. The alignment structure **130** is preferably molded with the fiber optic ferrule **100** at the same time and from the same material as the fiber optic ferrule **100.** As such, the fiber optic ferrule **100** and the alignment structure **130** are integrally formed. Alternatively, the alignment structure **130** could be attached to the fiber optic ferrule **100** sometime after the fiber optic ferrule is molded. It could be made from the same material and attached in a number of different ways. It could be attached with an adhesive, such as epoxy, or ultrasonically welded to the main body **102.** Alternatively, the fiber optic ferrule **100** could be molded as a body with a larger thickness and then the alignment structure **130** is formed by removing some of the fiber optic ferrule material.

A receptacle **150** for receiving the fiber optic ferrule **100** is illustrated in FIG. 3 and a second receptacle **150'** is illustrated in FIGS. 4 and 5. The only difference between the receptacle **150** and the receptacle **150'** is that receptacle **150'** has a plurality of lenses **154'** in the opening **152'** that receives the alignment structure **130.** So for receptacle **150'** with a plurality of lenses **154',** there may be no need to have the plurality of lenses in the main body **102.** The receptacle **150** (and receptacle **150')** is preferably aligned with the transceiver on the board, but those structures are omitted from the drawings to increase clarity.

The fiber optic ferrule **100** with the alignment structure **130** can be aligned with the opening **152.** As noted above, the first portion **136** and second portions **138,140** align the fiber optic ferrule **100** with the receptacle **150** (and receptacle **150').** In particular, the opening **152** has a first portion **154** and second portions **156,158.** However, the opening **152** is sized slightly different from the sizing of the alignment structure **130** and the first portion **136** and second portions **138,140.** The first portion **154** and second portions **156,158** of opening **150** are slightly larger than the first portion **136** and second portions **138,140,** respectively, but there may also be an interference fit. The difference in the sizes of the second portions is less than the difference in the sizes of the first portions because the second portions are the features that align the fiber optic ferrule **100** to the receptacle **150** (and receptacle **150').** Indeed, it is the curved second portions **156,158** and **138,140** that control the alignment of the fiber optic ferrule **100** to the receptacle **150.** Again, the exact shape of the opening **150** can be changed to match the configuration of the alignment structure **130** and any changes to that configuration noted above.

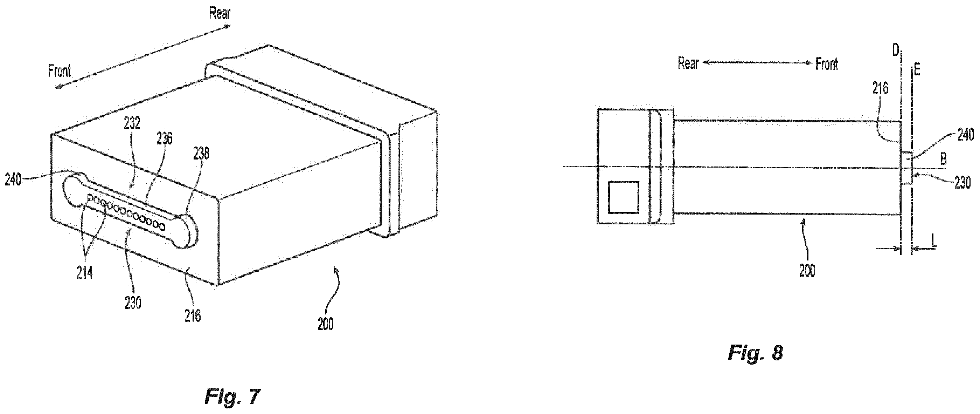

Turning now to the embodiment in FIGS. 7-12, there is a different embodiment of a fiber optic ferrule **200.** Applicant notes that the term "front" or "forward" means that direction where the fiber optic connector would meet with another fiber optic connector or device, while the term "rear" or "rearward" is used to mean the direction from which the optical fibers enter into the fiber-optic ferrule or fiber optic connector. Thus, "front" is that part of the fiber optic ferrule **200** on the left side of FIG. 7 where the alignment structure **230** is located and "forward" is out and to the left. "Rear" is that part of the fiber optic ferrule that is on the right side of the page and "rearward" is toward the right. In FIG. 8, front and forward is to the right, and rear, rearward, and back are on the left side of the fiber optic ferrule **200.**

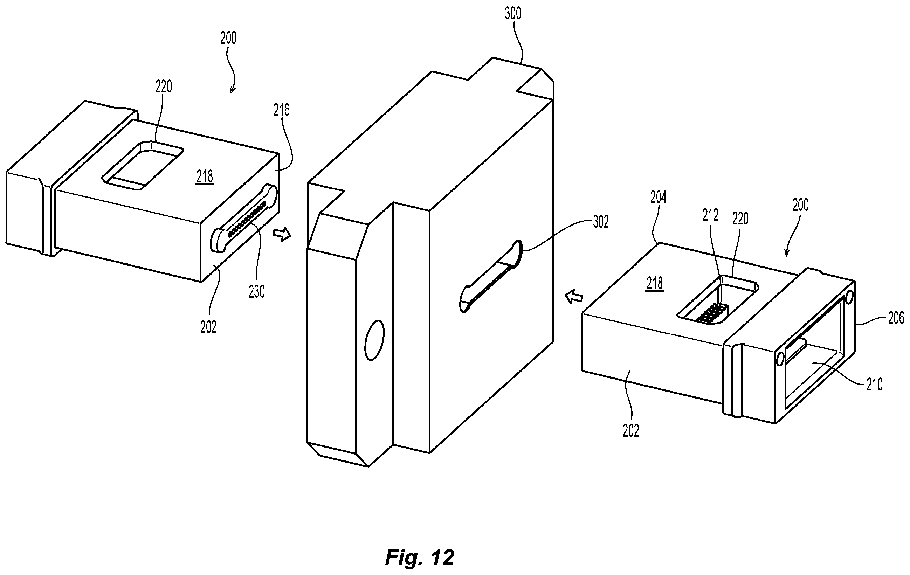

The fiber optic ferrule **200** has a main body **202** that extends between a front end **204** and a rear end **206.** A plurality of optical fibers (not shown but the same as optical fibers **108)** can be secured within the fiber optic ferrule **200.** The optical fibers are inserted into the fiber optic ferrule **200** through a rear opening **210** through the rear end **206.** Each of the plurality of optical fibers is inserted into one of a plurality of optical fiber receiving members **212** in a center portion of the main body **202.** See FIG. 12.

The fiber optic ferrule **200** has a front surface **216** through which the light to and from the optical fibers passes. Fiber optic ferrule **200** may have an opening **220** in a top surface **218** for an adhesive/epoxy to hold the plurality of optical fibers within the fiber optic ferrule **200.** See FIG. 12. It is the front surface **216** and the alignment structure **230** that will be the focus of the remainder of the discussion as the remainder of the fiber optic ferrule is known.

The alignment structure **230** extends from the front surface **216** and away from the main body **202.** In the middle **232** of the alignment structure are a plurality of lenses **214** that are in optical alignment with the plurality of optical fiber receiving members **212** (and the plurality of optical fibers).

The alignment structure **230** is configured similar to the shape of a dog bone, for the same reasons as noted above. It is also possible that the main body **202** have the same shape as the alignment structure **230,** e.g., a dog bone shape. It is possible that only a portion of the main body has the shape or the majority of main body has the shape.

The alignment structure **230** has a first portion **236** extending between two second portions **238,240** along the front surface **216.** As illustrated, the first portion **236** is generally rectangularly shaped, but could have other configurations as long as the functions of the alignment structure **230** as noted above are satisfied. For example, the first portion **236** could have convex or concave sides rather than the straight ones. The two second portions **238,240** are illustrated as circular portions that connect with the first portion **236** at the ends thereof. The first portion **236** is preferably as long as the length of the plurality of lenses **214** to allow the light to pass therethrough, but it could be longer or shorter.

Alternatively there could be a transmission window in the alignment structure **230** at the front surface **216** and the plurality of lenses **214** could be recessed or internal in the main body **202.**

The second portions **238,240** are generally circular as illustrated in the figures. The second portions **238,240** also have a diameter that is about 0.766 mm, and the first portion **236** has a width of about 0.516 mm. It is preferred that the diameter of the second portions **238,240** is at least 30% larger than the width of the first portion **236.** It is generally more preferable that the diameter of the second portions **238,240** is at least 50% larger than the width of the first portion **236.** It should also be noted that the second portions **238,240** may also have other configurations as long as the functions of the alignment structure **230** as noted below are satisfied. For example, the second portions **238,240** could be more oval, tear-drop shaped, or two rounded portions separated by a straight portion and still fall within the scope of the present invention. The first portion **236** may also have other features including, for example, a reduced width at the junction with the second portions **238,240** so the second portions **238,240** have more of a curved outer edge.

The front surface **116** lies in a first plane **D,** which is generally perpendicular to a plane **B** (and a longitudinal axis) in which the plurality of optical fiber receiving members **212** lie. The alignment structure **230** has a front face **242** that lies in a plane **E** that is also preferably parallel to plane **D** and perpendicular to plane **B.** See FIG. 8.

The alignment structure **230** extends a distance **L** of about 0.3 mm from the front surface **216** and away from the main body **202.** However, the distance that could be greater or less, depending on the need of the user and the structure that the fiber optic ferrule engages. The alignment structure **230** is preferably molded with the fiber optic ferrule **200** at the same time and from the same material as the fiber optic ferrule **200.** As such, the fiber optic ferrule **200** and the alignment structure **230** are integrally formed. Alternatively, the alignment structure **230** could be attached to the fiber optic ferrule **200** sometime after the fiber optic ferrule is molded. It could be made from the same material and attached in a number of different ways. It could be attached with an adhesive, such as epoxy, or ultrasonically welded to the main body **202.** Alternatively, the fiber optic ferrule **200** could be molded as a body with a larger length and then the alignment structure **230** is formed by removing some of the fiber optic ferrule material.

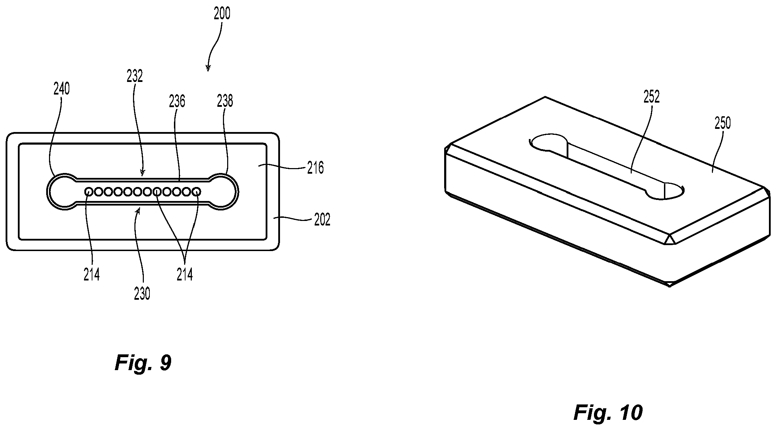

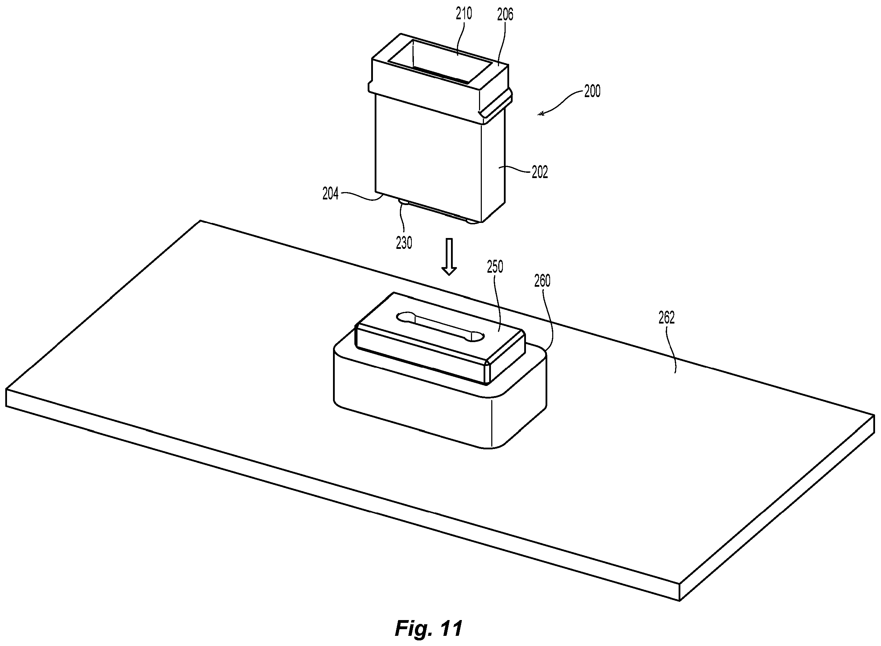

A receptacle **250** with an opening **252** for receiving the fiber optic ferrule **200** is illustrated in FIGS. 10 and 11. The function and design of the receptacle **250** is the same as described above and will not be repeated here. The fiber optic ferrule **200** is illustrated as being inserted into the receptacle **250** in FIG. 11 that also has an MOI **260** and a board **262.**

FIG. 12 illustrates two fiber optic ferrules **200** that will mate in an adapter **300.** The adapter **300** as an opening **302** that is the same as openings **150** and **250** to receive the alignment structure **230** on the fiber optic ferrules **200.**

A non claimed embodiment of a fiber optic ferrule **400** is illustrated in FIG. 13. The difference between the fiber optic ferrule **400** and the other fiber optic connectors is the shape of the alignment structure **430** on the front face **416.** The positioning, forming, and depth of the alignment structure **430** is also the same as noted above. The alignment structure **430** has a first portion **436** extending across the front face **416** and between two second portions **438,440.** The second portions **438,440** are on opposite sides of the width of the alignment structure **430** rather than the length thereof. This position moves the two second portions **438,440** closer to the center of the fiber optic ferrule **400** and may further reduce the effect of temperature changes on the alignment of the fiber optic ferrule **400.** In a variation of the alignment structure **430,** there may be more than one of each of the second portions 438, 440. For example, on each side of the first portion **436,** there may be two circular portions that connect with the first portion **436.** Furthermore, the embodiment in FIG. 13 may be combined with the prior embodiments, and dimensions of any portion of the alignment structures **130, 230, 430** may be varied in such a combination to achieve optimum results.

It will be apparent to those skilled in the art that various modifications and variations can be made to the present invention without departing from the scope of the appended claims. Thus it is intended that the present invention cover the modifications and variations of this invention provided they come within the scope of the appended claims.

## Claims

1. A fiber optic ferrule (100, 200) comprising:
a main body (102, 202) having a plurality of optical fiber receiving members (112, 212) therein, each of the plurality of optical fiber (108) receiving members configured to receive an optical fiber therein;
a surface (116, 216) on the main body in optical alignment with the plurality of optical fiber receiving members; and
an alignment structure (130, 230) extending from the surface (116, 216) outward away from or inward into the main body, the alignment structure is adapted to align the fiber optic ferrule with a receptacle (150, 250),
**characterized in** the alignment structure having a shape of a dog bone with a first portion (136, 236) extending between two second portions (138, 140, 238, 240) along the surface, the second portions being on opposite sides of the first portion, the first portion has at least one straight edge and each of the second portions has at least one round edge, and
further comprising a light transmission window (134) through which light passes to and from the optical fibers, the light transmission window being disposed within the first portion of the alignment structure.

2. The fiber optic ferrule according to claim 1, further comprising a plurality of lenses (114, 214), each of the plurality of lenses being in optical alignment with one of the plurality of optical fiber receiving members (112, 212).

3. The fiber optic ferrule according to claim 2, wherein each of the plurality of lenses is disposed in the alignment structure (130, 230).

4. The fiber optic ferrule according to claim 1, wherein the surface lies (116, 216) in a plane that is generally parallel to a longitudinal axis through the plurality of optical fiber receiving members (112, 212).

5. The fiber optic ferrule according to claim 1, wherein the surface lies in a plane that is generally perpendicular to a longitudinal axis through the plurality of optical fiber receiving members.

6. The fiber optic ferrule according to claim 1, wherein the alignment structure (130, 230) is integrally formed with the main body (102, 202) of the fiber optic ferrule (100, 200), or wherein the alignment structure is not formed integrally with the main body of the fiber optic ferrule.

7. The fiber optic ferrule (100, 200) according to claim 2, wherein the alignment structure mates (130, 230) with an optical component to position the plurality of lenses with respect to the optical component.

8. The fiber optic ferrule according to claim 7, wherein the optical component has a plurality of lenses (114, 214) disposed therein, the alignment structure (130, 230) of fiber optic ferrule aligning the plurality of lenses in the fiber optic ferrule to the plurality of lenses in the optical component.

9. The fiber optic ferrule according to claim 1, wherein the second portions are generally round (138, 140, 238, 240) and the first portion (136, 236) is generally rectangular.

10. The fiber optic ferrule according to claim 9, wherein the second portions (138, 140, 238, 240) have a diameter and the first portion has a width, the diameter of the second portions being at least 30% larger than the width.

11. A combination of a fiber optic ferrule (100, 200) according to claim 1 and an optical component,
wherein the optical component is having an engagement surface to engage a portion of the surface (116, 216) of the main body (102, 202) of the fiber optic ferrule and a second alignment structure having a center portion extending between two outside portions, the outside portions being on opposite sides of the center portion,
wherein one of the first and second alignment structures (130, 230) extend outward and the other of the first and second alignment structures extend inwardly.

12. The combination of a fiber optic ferrule (100, 200) and an optical component according to claim 11, wherein the second alignment structure is an opening in the optical component and the first alignment structure (130, 230) extends from the surface (116, 216) of the fiber optic ferrule (100, 200), the central portion is a rectangular center portion to receive the first portion (136) therein and the two outside portion portions are circular and receive therein a respective one of the two second portions (138, 140).

13. The combination of a fiber optic ferrule (100, 200) and an optical component according to claim 12, wherein there is a first gap between the center portion and the first portion having a first width and a second gap between the two side portions ended to second portions having a second width.

14. The combination of a fiber optic ferrule (100, 200) and an optical component according to claim 13, wherein the width of the first gap is larger than the width of the second gap, especially the width of the first gap is twice as large as the second gap.

15. The combination of a fiber optic ferrule (100, 200) and an optical component according to claim 11, wherein the first alignment structure (130, 230) is a recess in the surface of the fiber optic ferrule and the second alignment structure extends from engagement surface, the first portion is a rectangular center portion (136) to receive the center portion therein and the two second portions are circular and receive a respective one of the two second portions (138, 140).

## Patentansprüche

1. Eine faseroptische Ferrule (100, 200), umfassend:
einen Hauptkörper (102, 202) mit einer Vielzahl von optischen Faseraufnahmeelementen (112, 212) darin, wobei jedes der Vielzahl von optischen Faseraufnahmeelementen (108) so ausgebildet ist, dass es eine optische Faser darin aufnehmen kann;
eine Oberfläche (116, 216) am Hauptkörper, die in optischer Ausrichtung zu der Vielzahl von optischen Faseraufnahmeelementen ist; und
eine Ausrichtungsstruktur (130, 230), die sich von der Oberfläche (116, 216) nach außen weg vom Hauptkörper oder nach innen in den Hauptkörper hinein erstreckt, wobei die Ausrichtungsstruktur geeignet ist, die faseroptische Ferrule mit einer Aufnahme (150, 250) auszurichten,
**dadurch gekennzeichnet,**
**dass** die Ausrichtungsstruktur die Form eines Hundeknochens mit einem ersten Abschnitt (136, 236) aufweist, der sich entlang der Oberfläche zwischen zwei zweiten Abschnitten (138, 140, 238, 240) entlang der Oberfläche erstreckt, wobei sich die zweiten Abschnitte auf gegenüberliegenden Seiten des ersten Abschnitts befinden, der erste Abschnitt mindestens eine gerade Kante aufweist und jeder der zweiten Abschnitte mindestens eine abgerundete Kante aufweist, und
ferner ein Lichtdurchlassfenster (134) umfasst, durch das Licht zu den und von den optischen Fasern hindurchtritt, wobei das Lichtdurchlassfenster innerhalb des ersten Abschnitts der Ausrichtungsstruktur angeordnet ist.

2. Faseroptische Ferrule nach Anspruch 1, ferner umfassend eine Vielzahl von Linsen (114, 214), wobei jede der Vielzahl von Linsen in optischer Ausrichtung mit einem der Vielzahl von optischen Faseraufnahmeelementen (112, 212) steht.

3. Faseroptische Ferrule nach Anspruch 2, wobei jede der Vielzahl der Linsen in der Ausrichtungsstruktur (130, 230) angeordnet ist.

4. Faseroptische Ferrule nach Anspruch 1, wobei die Oberfläche (116, 216) in einer Ebene liegt, die im Wesentlichen parallel zu einer Längsachse durch die Vielzahl der optischen Aufnahmeelemente (112, 212) verläuft.

5. Faseroptische Ferrule nach Anspruch 1, wobei die Oberfläche in einer Ebene liegt, die im Wesentlichen senkrecht zu einer Längsachse durch die Vielzahl von optischen Faseraufnahmeelementen verläuft.

6. Faseroptische Ferrule nach Anspruch 1, wobei die Ausrichtungsstruktur (130, 230) integral mit dem Hauptkörper (102, 202) der faseroptischen Ferrule (100, 200) ausgebildet ist oder wobei die Ausrichtungsstruktur nicht integral mit dem Hauptkörper der faseroptischen Ferrule ausgebildet ist.

7. Faseroptische Ferrule (100, 200) nach Anspruch 2, wobei die Ausrichtungsstruktur (130, 230) mit einer optischen Komponente zusammenpasst, um die Vielzahl von Linsen in Bezug auf die optische Komponente zu positionieren.

8. Faseroptische Ferrule gemäß Anspruch 7, wobei die optische Komponente eine Vielzahl von darin angeordneten Linsen (114, 214) aufweist, wobei die Ausrichtungsstruktur (130, 230) der faseroptischen Ferrule die Vielzahl von Linsen in der faseroptischen Ferrule auf die Vielzahl von Linsen in der optischen Komponente ausrichtet.

9. Faseroptische Ferrule nach Anspruch 1, wobei die zweiten Abschnitte im Wesentlichen rund (138, 140, 238, 240) und der erste Abschnitt (136, 236) im Wesentlichen rechteckig ist.

10. Faseroptische Ferrule nach Anspruch 9, wobei die zweiten Abschnitte (138, 140, 238, 240) einen Durchmesser und der erste Abschnitt eine Breite aufweisen, wobei der Durchmesser der zweiten Abschnitte mindestens 30 % größer ist als die Breite.

11. Eine Kombination aus einer faseroptischen Ferrule (100, 200) gemäß Anspruch 1 und einer optischen Komponente,
wobei die optische Komponente eine Eingriffsfläche zum Eingriff mit einem Abschnitt der Oberfläche (116, 216) des Hauptkörpers (102, 202) der faseroptischen Ferrule und eine zweite Ausrichtungsstruktur aufweist, die einen Mittelabschnitt aufweist, der sich zwischen zwei Außenabschnitten erstreckt, wobei sich die Außenabschnitte auf gegenüberliegenden Seiten des Mittelabschnitts befinden,
wobei sich eine der ersten und zweiten Ausrichtungsstrukturen (130, 230) nach außen erstreckt und die andere der ersten und zweiten Ausrichtungsstrukturen sich nach innen erstreckt.

12. Kombination aus einer faseroptischen Ferrule (100, 200) und einer optischen Komponente gemäß Anspruch 11, wobei die zweite Ausrichtungsstruktur eine Öffnung in der optischen Komponente ist und sich die erste Ausrichtungsstruktur (130, 230) von der Oberfläche (116, 216) der faseroptischen Ferrule (100, 200) erstreckt, der mittlere Abschnitt ein rechteckiger Mittelabschnitt ist, um den ersten Abschnitt (136) darin aufzunehmen, und die beiden äußeren Abschnitte kreisförmig sind und jeweils einen der beiden zweiten Abschnitte (138, 140) darin aufnehmen.

13. Kombination aus einer faseroptischen Ferrule (100, 200) und einer optischen Komponente nach Anspruch 12, wobei zwischen dem Mittelabschnitt und dem ersten Abschnitt eine erste Lücke mit einer ersten Breite und zwischen den beiden Seitenabschnitten, die in zweite Abschnitte münden, eine zweite Lücke mit einer zweiten Breite vorhanden ist.

14. Kombination aus einer faseroptischen Ferrule (100, 200) und einer optischen Komponente gemäß Anspruch 13, wobei die Breite der ersten Lücke größer ist als die Breite der zweiten Lücke, insbesondere ist die Breite der ersten Lücke doppelt so groß wie die der zweiten Lücke.

15. Kombination aus einer faseroptischen Ferrule (100, 200) und einer optischen Komponente gemäß Anspruch 11, wobei die erste Ausrichtungsstruktur (130, 230) eine Aussparung in der Oberfläche der faseroptischen Ferrule ist und sich die zweite Ausrichtungsstruktur von der Eingriffsfläche aus erstreckt, der erste Abschnitt ein rechteckiger Mittelabschnitt (136) zur Aufnahme des Mittelabschnitts darin ist und die beiden zweiten Abschnitte kreisförmig sind und jeweils einen der beiden zweiten Abschnitte (138, 140) aufnehmen.

## Revendications

1. Ferrule de fibres optiques (100, 200) comprenant:
un corps principal (102, 202) comportant une pluralité d'éléments de réception de fibre optique (112, 212) dans celui-ci, chacun de la pluralité d'éléments de réception de fibre optique (108) étant configuré pour y recevoir une fibre optique;
une surface (116, 216) sur le corps principal en alignement optique avec la pluralité d'éléments de réception de fibre optique ; et
une structure d'alignement (130, 230) s'étendant à partir de la surface (116, 216) vers l'extérieur en s'éloignant ou vers l'intérieur dans le corps principal, la structure d'alignement étant adaptée pour aligner la ferrule de fibres optiques avec une prise (150, 250),
**caractérisée en ce que**
la structure d'alignement se présente sous la forme d'un os de chien avec une première partie (136, 236) s'étendant entre deux secondes parties (138, 140, 238, 240) le long de la surface, les secondes parties étant sur des côtés opposés de la première partie, la première partie a au moins un bord droit et chacune des secondes parties a au moins un bord arrondi, et
comprenant en outre une fenêtre de transmission de lumière (134) à travers laquelle la lumière passe vers et depuis les fibres optiques, la fenêtre de transmission de lumière étant disposée à l'intérieur de la première partie de la structure d'alignement.

2. Ferrule de fibres optiques selon la revendication 1, comprenant en outre une pluralité de lentilles (114, 214), chacune de la pluralité de lentilles étant en alignement optique avec l'un de la pluralité d'éléments de réception de fibre optique (112, 212).

3. Ferrule de fibres optiques selon la revendication 2, dans laquelle chacune de la pluralité de lentilles est disposée dans la structure d'alignement (130, 230).

4. Ferrule de fibres optiques selon la revendication 1, dans laquelle la surface (116, 216) s'étend dans un plan qui est généralement parallèle à un axe longitudinal sur toute la pluralité d'éléments de réception de fibre optique (112, 212).

5. Ferrule de fibres optiques selon la revendication 1, dans laquelle la surface s'étend dans un plan qui est généralement perpendiculaire à un axe longitudinal sur toute la pluralité d'éléments de réception de fibre optique.

6. Ferrule de fibres optiques selon la revendication 1, dans laquelle la structure d'alignement (130, 230) est formée d'un seul tenant avec le corps principal (102, 202) de la ferrule de fibres optiques (100, 200), ou dans laquelle la structure d'alignement n'est pas formée d'un seul tenant avec le corps principal de la ferrule de fibres optiques.

7. Ferrule de fibres optiques (100, 200) selon la revendication 2, dans laquelle la structure d'alignement est accouplée (130, 230) avec un composant optique pour positionner la pluralité de lentilles par rapport au composant optique.

8. Ferrule de fibres optiques selon la revendication 7, dans laquelle le composant optique comporte une pluralité de lentilles (114, 214) disposées dans celui-ci, la structure d'alignement (130, 230) de la ferrule de fibres optiques alignant la pluralité de lentilles dans la ferrule de fibres optiques avec la pluralité de lentilles dans le composant optique.

9. Ferrule de fibres optiques selon la revendication 1, dans laquelle les secondes parties sont généralement arrondies (138, 140, 238, 240) et la première partie (136, 236) est généralement rectangulaire.

10. Ferrule de fibres optiques selon la revendication 9, dans laquelle les secondes parties (138, 140, 238, 240) présentent un diamètre et la première partie présente une largeur, le diamètre des secondes parties étant au moins 30 % plus grand que la largeur.

11. Combinaison d'une ferrule de fibres optiques (100, 200) selon la revendication 1 et d'un composant optique,
dans laquelle le composant optique a une surface d'engagement pour engager une partie de la surface (116, 216) du corps principal (102, 202) de la ferrule de fibres optiques et une seconde structure d'alignement ayant une partie centrale s'étendant entre deux parties extérieures, les parties extérieures se situant sur des côtés opposés de la partie centrale, dans laquelle l'une des première et seconde structures d'alignement (130, 230) s'étend vers l'extérieur et l'autre des première et seconde structures d'alignement s'étend vers l'intérieur.

12. Combinaison d'une ferrule de fibres optiques (100, 200) et d'un composant optique selon la revendication 11, dans laquelle la seconde structure d'alignement est une ouverture dans le composant optique et la première structure d'alignement (130, 230) s'étend à partir de la surface (116, 216) de la ferrule de fibres optiques (100, 200), la partie centrale est une partie centrale rectangulaire pour y recevoir la première partie (136) et les deux parties de partie extérieure sont circulaires et y reçoivent l'une respective des deux secondes parties (138, 140).

13. Combinaison d'une ferrule de fibres optiques (100, 200) et d'un composant optique selon la revendication 12, dans laquelle il y a un premier espace entre la partie centrale et la première partie ayant une première largeur et un second espace entre les deux parties latérales terminées par des secondes parties ayant une seconde largeur.

14. Combinaison d'une ferrule de fibres optiques (100, 200) et d'un composant optique selon la revendication 13, dans laquelle la largeur du premier espace est plus grande que la largeur du second espace, en particulier la largeur du premier espace est deux fois plus grande que le second espace.

15. Combinaison d'une ferrule de fibres optiques (100, 200) et d'un composant optique selon la revendication 11, dans laquelle la première structure d'alignement (130, 230) est un évidement dans la surface de la ferrule de fibres optiques et la seconde structure d'alignement s'étend à partir de la surface d'engagement, la première partie est une partie centrale rectangulaire (136) pour y recevoir la partie centrale et les deux secondes parties sont circulaires et reçoivent l'une respective des deux secondes parties (138, 140).
